# DEMANDE DE BREVET EUROPEEN

(11) **EP 1 344 951 A1**
(43) Date de publication de la demande: **17.09.2003**
(21) Numéro de dépôt: 03354013.9
(22) Date de dépôt: 14.02.2003
(51) Int. Cl.: F16B 45/02, F16B 45/04

(54) **Mousqueton équipé d'une bague de verrouillage à patte de séparation**

(30) Priorité: 11.03.2002 FR 0203017
(71) Demandeur: ZEDEL, 38920 Crolles (FR)
(72) Inventeur: Petzl, Paul, 38530 Barraux (FR); Bauvois, Anne, 38190 Laval (FR)
(74) Mandataire: Hecke, G.

(57) **Abrégé**

Mousqueton comprenant un corps (12) fixe évidé en forme de C, un doigt (14) mobile autour d'un axe (16) de pivotement, et une bague de manoeuvre (22) montée autour du doigt (14) entre une première position de verrouillage pour le blocage positif du doigt dans la position de fermeture, et une deuxième position de déverrouillage autorisant le déplacement du doigt (14) vers la position d'ouverture. La bague de manoeuvre (22) est équipée d'une patte (24) faisant saillie de la surface latérale pour venir en butée dans la première position de verrouillage contre la partie du corps (12) fixe située en regard du doigt (14) en ménageant deux ouvertures (34A, 34B) dans le corps (12). Dans la deuxième position de déverrouillage, la patte (24) se trouve dans un plan différent de celui du corps (12) en délimitant une seule lumière dans le mousqueton (10).

## Description

### Domaine technique de l'invention

L'invention est relative à un mousqueton comprenant :
- un corps fixe évidé en forme de C ayant une première extrémité conformée en un élément de retenue, et une deuxième extrémité d'articulation d'un doigt mobile autour d'un axe de pivotement entre une position de fermeture, et une position d'ouverture,
- une bague de manoeuvre montée autour du doigt entre une première position de verrouillage pour le blocage positif du doigt dans la position de fermeture, et une deuxième position de déverrouillage autorisant le déplacement du doigt vers la position d'ouverture, ladite bague étant susceptible d'être déplacée manuellement pour le passage de la première position de verrouillage vers is deuxième position de déverrouillage, et vice versa.

### Etat de la technique

Un mousqueton à bague de verrouillage du doigt mobile est connu du document EP 0 826 890.

Pour empêcher le retournement du mousqueton sur la corde lorsque ce dernier sert d'organe d'attache au baudrier, il est connu par le document EP 0 976 936 d'utiliser un connecteur articulé sur le corps fixe, et pouvant être rabattu sur le doigt de manière à augmenter la sécurité et la tenue mécanique. La mise en place du connecteur doit être opérée manuellement après la fermeture du doigt. La sécurité n'est néanmoins pas garantie en cas d'oubli ou de positionnement incorrect du connecteur sur le doigt.

### Objet de l'invention

L'objet de l'invention consiste à réaliser un mousqueton à bague de verrouillage bénéficiant d'une sécurité et d'une tenue mécanique optimum dans la position fermée du doigt.

Le dispositif selon l'invention est caractérisé en ce que la bague de manoeuvre est équipée d'une patte faisant saillie de la surface latérale pour venir automatiquement en butée dans la première position de verrouillage contre la partie du corps fixe située en regard du doigt en ménageant deux ouvertures dans le corps, et que dans la deuxième position de déverrouillage, ladite patte se trouve dans un plan différent de celui du corps en délimitant une seule lumière dans le mousqueton.

La présence des deux ouvertures dans la première position de verrouillage évite les conséquences du travail du mousqueton en porte-à-faux.

Selon une caractéristique de l'invention, la bague de manoeuvre est dotée d'une lumière dans laquelle s'engage un téton du doigt pour déterminer le débattement angulaire lors du mouvement de ladite bague.

Selon une caractéristique de l'invention, la lumière comporte deux saignées pour rendre la bague bistable dans chacune des positions de verrouillage et de déverrouillage.

Selon une variante, la lumière estagencée pour rendre la bague monostable dans la position de verrouillage.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- les figures 1 et 2 sont deux vues en perspective du mousqueton selon l'invention, la bague se trouvant en position fermée verrouillée ;
- la figure 3 montre une vue en coupe verticale du mousqueton de la figure 1 ;
- la figure 4 représente une vue de détail de la bague de verrouillage de la figure 2;
- les figures 5 à 9 illustrent les phases successives de fonctionnement du mousqueton lors de son ouverture ;
- la figure 10 montre une variante de réalisation du mousqueton ;
- les figures 11 et 12 représentent une autre variante du mousqueton, respectivement en position verrouillée et en position déverrouillée ;
- la figure 13 représente une vue de détail de la bague de verrouillage de la figure 11.

### Description d'un mode de réalisation préférentiel.

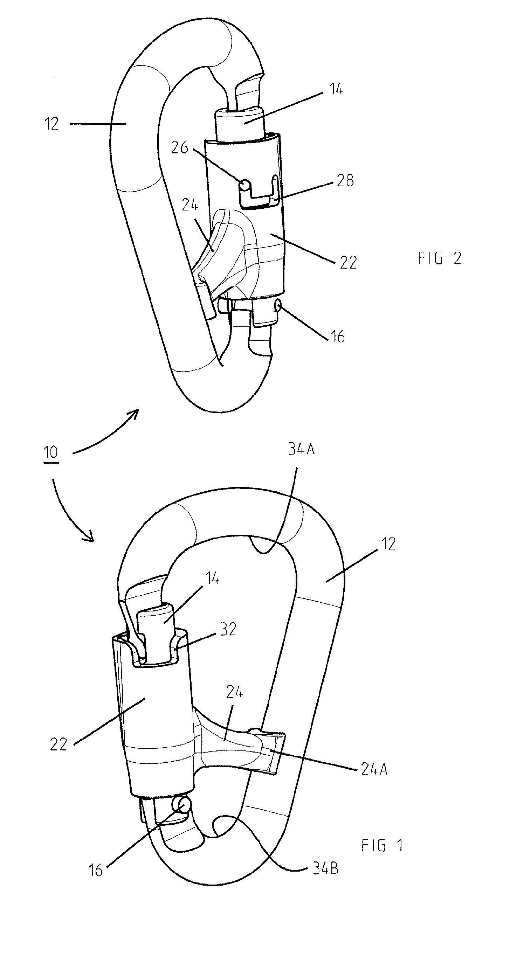

En référence aux figures 1 à 9, un mousqueton 10 comporte un corps 12 fixe évidé en forme de C, et un doigt 14 mobile de section circulaire, lequel est monté à pivotement sur un axe 16 du corps 12 entre une position de fermeture et une position d'ouverture. Le déplacement du doigt 14 vers la position d'ouverture s'effectue vers l'intérieur du corps 12 de manière à ménager un intervalle pour le passage d'une corde ou de tout autre élément d'assurage. Le doigt 14 articulé est sollicité vers la position de fermeture au moyen d'un ressort de rappel (non représenté).
Dans la position de fermeture du mousqueton 10, une protubérance 18 à l'extrémité du corps 12 constitue un élément de retenue qui s'engage dans un orifice 20 borgne du doigt 14. Cet orifice 20 est agencé en élément d'accrochage situé à l'opposé de l'axe 16, et coopérant avec l'élément de retenue pour former une liaison à trou de serrure, susceptible de résister à des forces de traction importantes.

Une bague de manoeuvre 22 est montée coaxialement sur le doigt 14 mobile, en étant déplaçable angulairement entre une première position de verrouillage et une deuxième position de déverrouillage. La longueur de la bague de manoeuvre 22 est plus courte que celle du doigt 14 qu'elle entoure. Elle comporte en plus une patte 24 de renforcement faisant saillie de la surface latérale pour venir en butée contre le corps 12 en position de verrouillage lorsque le mousqueton 10 est fermé. L'extrémité de la patte 24 est dotée à cet effet d'une face d'appui 24A incurvée destinée à épouser la partie interne du corps 12.

Dans cette position fermée verrouillée représentée aux figures 1 à 3, il est impossible de déplacer le doigt 14 vers la position d'ouverture suite au double verrouillage mécanique exercé par la bague de manoeuvre 22 et la patte 24.

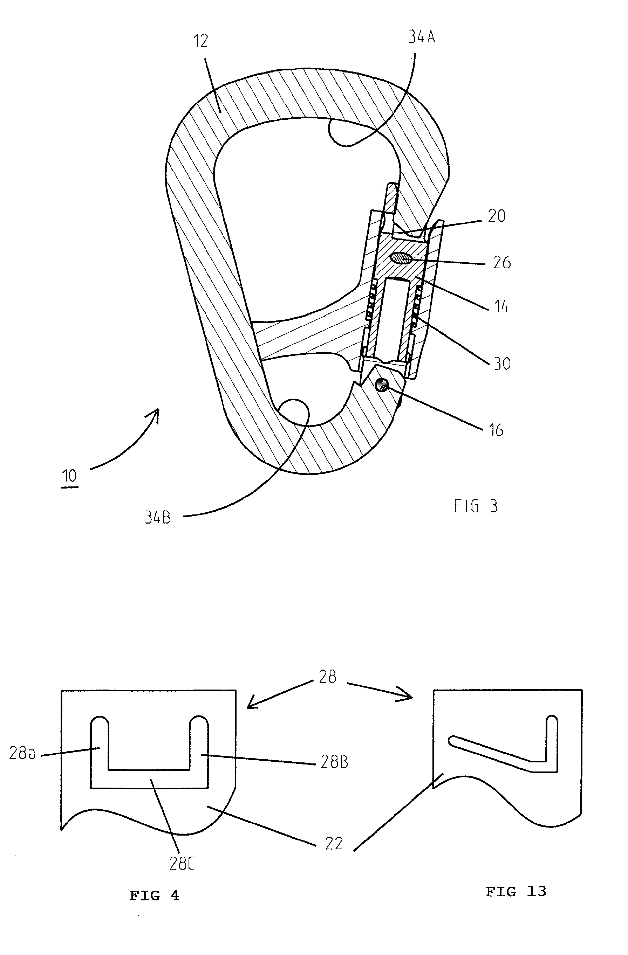

Le doigt 14 est équipé en plus d'un téton 26 radial engagé dans une lumière 28 de la bague 22 rotative pour la rendre bistable dans chacune des positions de verrouillage et de déverrouillage. La lumière 28 (figure 4) en forme de U comprend deux saignées 28A, 28B verticales reliées entre elles par une rainure 28C sensiblement horizontale. Le décalage entre les deux saignées 28A, 28B détermine le débattement angulaire de la bague de manoeuvre 22, et un ressort 30 hélicoïdal sollicite cette dernière vers la position de verrouillage dès que le téton 26 se trouve au niveau de la rainure 28C.

Une encoche 32 semi-ouverte est ménagée à l'extrémité de la bague 22 pour libérer le trou de serrure en position de déverrouillage. Il est alors possible de pousser le doigt 14 vers l'intérieur du corps 12 pour l'ouverture du mousqueton 10.

Le fonctionnement du mousqueton 10 selon les figures 1 à 9 est le suivant :

Sur les figures 1 à 3, le doigt 12 est en position de fermeture, et la bague de manoeuvre 22 se trouve en position de verrouillage de manière à bloquer le trou de serrure du mousqueton. Le téton 26 est maintenu au fond de la saignée 28A par l'action de rappel du ressort 30. Cette position est parfaitement stable, et la patte 24 prend appui sur la paroi interne du corps 12, pour constituer un deuxième verrou qui renforce la tenue mécanique en position de fermeture. La patte subdivise l'intérieur du mousqueton 10 en deux ouvertures 34A, 34B de tailles différentes. L'organe d'assurance (par exemple un bloqueur ou un descendeur) est accroché à l'intérieur de l'une des ouvertures, et ne peut pas être dévié vers l'autre ouverture renfermant une corde. Le doigt 14 est ainsi moins sollicité en fonction des différentes orientations du mousqueton 10. La présence des deux ouvertures 34A, 34B n'autorise qu'une sollicitation selon le grand axe, et évite de ce fait les conséquences du travail du mousqueton en porte-à -faux.

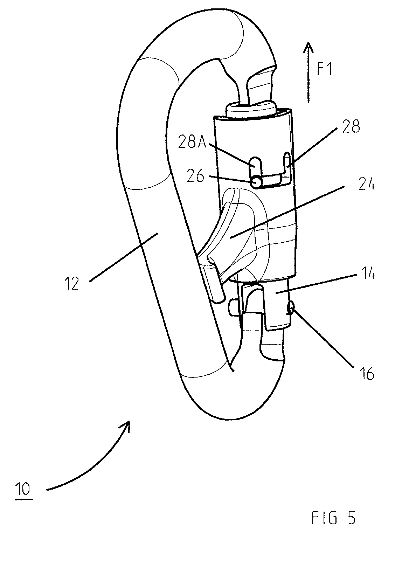

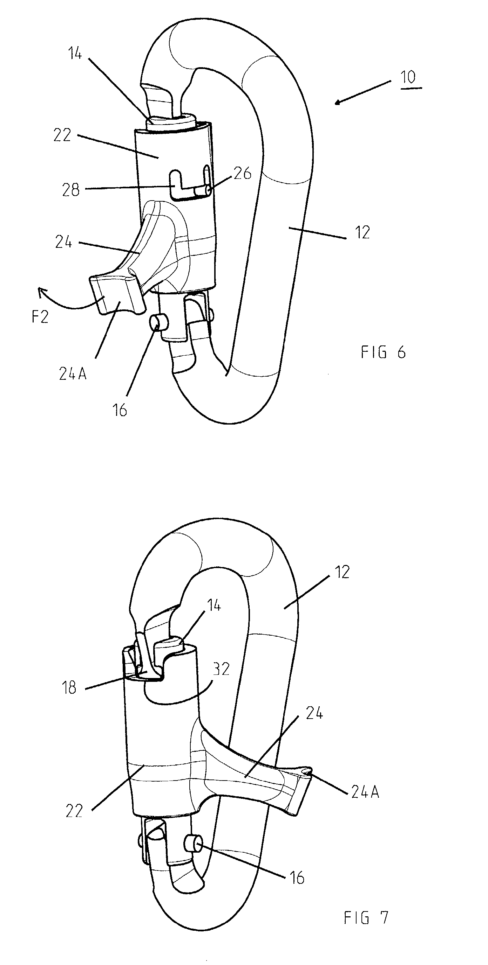

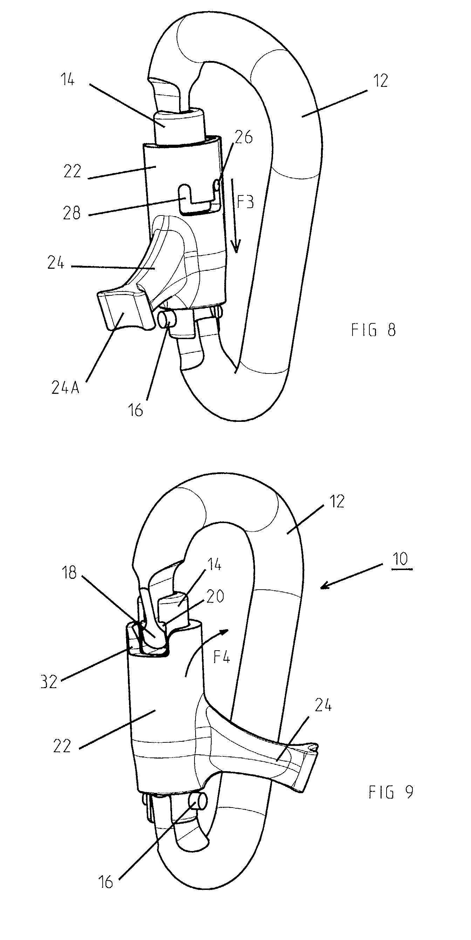

Pour débloquer la bague 22, il suffit de la pousser vers le haut (flèche F1, figure 5) de manière à dégager le téton 26 de la saignée 28A. On déplace ensuite la bague 22 en rotation dans le sens de la flèche F2 (figure 6) jusqu'à ce que le téton 26 vient en fin de course de la rainure 28C. Dans cette position intermédiaire, l'encoche 32 de la bague 22 arrive partiellement au droit du trou de serrure, mais empêche toujours l'ouverture du doigt 14 (figure 7). La patte 24 solidaire de la bague 22, s'écarte du corps 12 lors de ce mouvement de rotation.

Le déverrouillage du doigt 14 intervient par abaissement de la bague 22 (flèche F3, figure 8) provoquant la venue du téton 26 au fond de la saignée 28B. Dans cette position stable de la bague 22, l'encoche 32 libère totalement le trou de serrure (figure 9), ce qui autorise le déplacement du doigt 14 vers l'intérieur (flèche F4) pour l'ouverture du mousqueton 10.

Il est clair que le système de verrouillage de la bague 22 peut être différent, soit en modifiant la forme de la lumière 28, par exemple en L pour rendre la bague 22 monostable dans la position de verrouillage, soit en remplaçant le téton 26 par d'autres moyens de blocage, par exemple à billes.

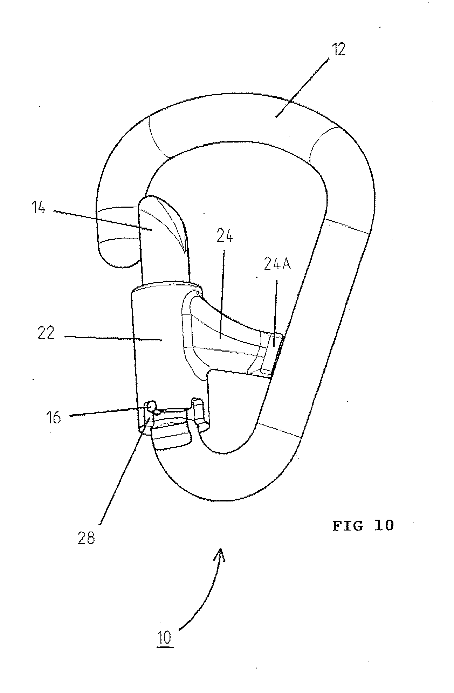

Selon la figure 10, la lumière 28 en U est agencée à la partie inférieure de la bague 22 de manoeuvre, et l'axe de pivotement 16 constitue le téton qui s'engage dans la lumière 28. Dans cette variante, la protubérance 18 et l'orifice 20 sont supprimés, les extrémités du corps 12 et du doigt 14 venant simplement en butée en position de fermeture. On obtient ainsi un seul verrouillage mécanique du doigt 14 en position de fermeture.

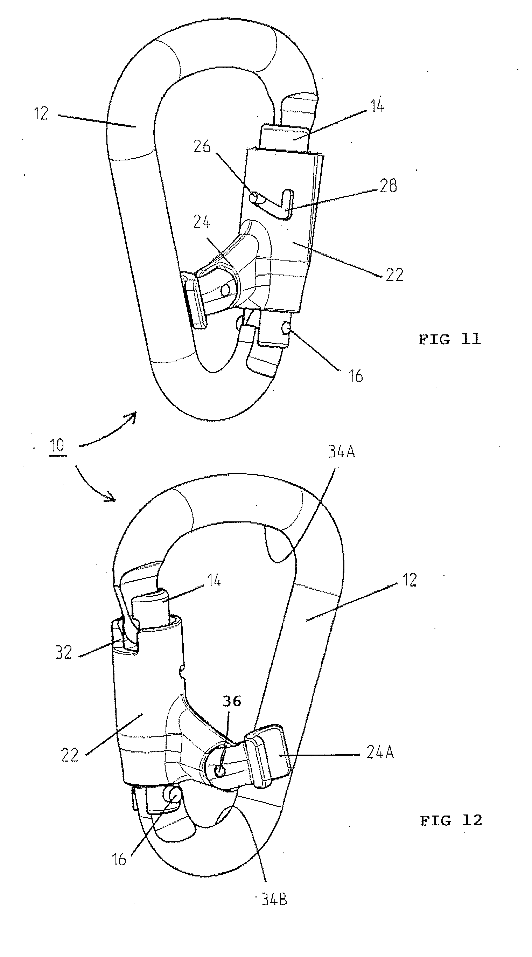

En référence aux figures 11 et 12, la lumière 28 de la bague 22 est en forme de V, de manière à provoquer le retour automatique de la bague 22 en position verrouillée lors de la course de fermeture du doigt 14. L'extrémité de la patte 24 est montée à pivotement sur un axe intermédiaire 36 de manière à interdire le déplacement relatif de ladite patte par rapport au corps 12 du mousqueton 10.

Il est clair que la une patte (24) peut faire partie monobloc de la bague de manoeuvre (22), ou peut constituer une pièce rapportée sur la bague 22.

## Revendications

1. Mousqueton comprenant :
- un corps (12) fixe évidé en forme de C ayant une première extrémité conformée en un élément de retenue, et une deuxième extrémité sur laquelle est articulé un doigt (14) mobile autour d'un axe (16) de pivotement entre une position de fermeture, et une position d'ouverture,
- une bague de manoeuvre (22) montée autour du doigt (14) entre une première position de verrouillage pour le blocage positif du doigt dans la position de fermeture, et une deuxième position de déverrouillage autorisant le déplacement du doigt (14) vers la position d'ouverture, ladite bague (22) étant susceptible d'être déplacée manuellement pour le passage de la première position de verrouillage vers la deuxième position de déverrouillage, et vice versa,
**caractérisé en ce que** la bague de manoeuvre (22) est équipée d'une patte (24) faisant saillie de la surface latérale pour venir automatiquement en butée dans la première position de verrouillage contre la partie du corps (12) fixe située en regard du doigt (14) en ménageant deux ouvertures (34A, 34B) dans le corps (12), et que dans la deuxième position de déverrouillage, ladite patte (24) se trouve dans un plan différent de celui du corps (12) en délimitant une seule lumière dans le mousqueton (10).

2. Mousqueton selon la revendication 1, **caractérisé en ce que** la bague de manoeuvre (22) est dotée d'une lumière (28) dans laquelle s'engage un téton (26) du doigt (14) pour déterminer le mouvement de ladite bague.

3. Mousqueton selon la revendication 2, **caractérisé en ce que** le téton (26) est constitué par l'axe de pivotement (16) du doigt (14).

4. Mousqueton selon la revendication 2, **caractérisé en ce que** la lumière (28) comporte deux saignées (28A, 28B) pour rendre la bague (22) bistable dans chacune des positions de verrouillage et de déverrouillage.

5. Mousqueton selon la revendication 2, **caractérisé en ce que** la lumière (28) est agencée pour rendre la bague (22) monostable dans la position de verrouillage.

6. Mousqueton selon l'une des revendications 1 à 5, **caractérisé en ce que** l'extrémité libre de la patte (24) est pourvue d'une face d'appui (24A) incurvée destinée à coopérer avec la forme du corps (12).

7. Mousqueton selon l'une des revendications 1 à 6, **caractérisé en ce que** le doigt (14) comporte un élément d'accrochage situé à l'opposé de l'axe (16) pour coopérer avec l'élément de retenue dans la position de fermeture.

8. Mousqueton selon l'une des revendications 1 à 7, **caractérisé en ce que** l'extrémité de la patte (24) est articulée autour d'un axe intermédiaire 36 de manière à interdire le déplacement relatif de ladite patte par rapport au corps (12).
